Europäisches Patentamt

European Patent Office

Office européen des brevets

(11) Veröffentlichungsnummer: **0 412 233 A2**

# EUROPÄISCHE PATENTANMELDUNG

(21) Anmeldenummer: 90101134.6

(22) Anmeldetag: 20.01.90

(51) Int. Cl.5: **H02G 3/04**

(30) Priorität: 09.08.89 CH 2934/89

(43) Veröffentlichungstag der Anmeldung:
13.02.91 Patentblatt 91/07

(84) Benannte Vertragsstaaten:
AT BE CH DE DK ES FR GB GR IT LI LU NL SE

(71) Anmelder: FLORIAN WEBER AG
Badstrasse 5
CH-5737 Menziken(CH)

(72) Erfinder: Hauser, Gebhard
Hofmattstrasse 1
CH-5737 Menziken(CH)

(74) Vertreter: Kemény, Andreas
c/o Kemény AG Patentanwaltbüro Postfach
3414
CH-6002 Luzern(CH)

(54) Kabelkanal.

(57) Entlang eines als Federband ausgebildeten biegsamen Trägers sind quer dazu angeordnete Halterungselemente (1) aufgereiht, deren jedes einen mit dem Federband verbundenen Boden (11) und zwei an dessen Enden davon aufragende Flansche (12) aufweist. Jedes Halterungselement (1) hat in Verbindung mit seinem Boden (11) zwei zueinander rechtwinklige Schlitze (15, 16). Für einen biegsamen Kabelkanal ist nur in einem der Schlitze (15, 16) ein Federband; dabei ist entweder die Möglichkeit gegeben den Kabelkanal nur nach oden und unten oder nur nach rechts und links zu biegen. In der jeweils anderen Richtung ist der Kabelkanal steif. Dadurch ist er ausreichend stabil. Man kann von der einen Art der Biegsamkeit zur anderen übergehen, wenn man Federband abschnittweise in den einen oder anderen der Schlitze steckt. Recht unbiegsame, steife, gerade Abschnitte kann man erhalten, wenn man in beide Schlitze Federbänder steckt.

Es ist somit auf einfachste Weise möglich, drei verschieden biegsame, insbesondere zum Verkabeln von Mobiliar geeignete Kabelkanäle aus nur zwei verschiedenen Bestandteilen (Federband und Halterungselement) aufzubauen. Das ergibt neben Wirtschaftlichkeit auch Versabilität und erst noch Stabilität.

FIG. 8

# KABELKANAL

Die Erfindung betrifft einen Kabelkanal nach dem Oberbegriff des Anspruchs 1.

Herkömmliche steife Kabelkanäle, beispielsweise der aus der US-PS 3,024,301 (Inhaber: General Electric; Erfinder: Kurt R. Walch) bekanntgewordene, haben den Nachteil, dass man bei Aenderungen des Verlaufs des Kabelkanals Abänderungen vornehmen muss: Entweder muss man Seiten- und/oder Boden-Teile entfernen und/oder man muss Bogen- Winkel- oder T-Stücke und dergleichen einfügen.

Um dies zu vermeiden, schlug man in der DE-PS 1 615 074 (Anmelder und Erfinder Heinrich ZIEGLER) vor die Halterungselemente an einem in allen Richtungen des Raums "schlangengleich" verbiegbaren Basisstrang (Träger) aufzureihen Das ist bei Verlaufsänderungen des Kabelkanals vorteilhaft, hat aber den Nachteil, dass er so wenig selbsttragend ist, dass er dauernd und zumindest in sehr kurzen Abständen unterstützt werden muss. Der Vorteil der Formbarkeit wurde also durch den Nachteil der Instabilität, beispielsweise des Fehlens eines ausreichenden Selbsttragevermögens, erkauft.

Der Erfindung liegt die Aufgabe zugrunde, einen wirtschaftlich vorteilhaft herstellbaren Kabelkanal zu schaffen, der an gewünschte Aenderungen seines Verlaufs leicht anpassbar und doch ausreichend stabil ist.

Zur Lösung dieser Aufgabe wird der im Anspruch 1 definierte Kabelkanal vorgeschlagen.

Weil jedes Halterungselement in Verbindung mit seinem Boden zwei zueinander rechtwinklige Schlitze aufweist, von denen wenigstens einer von einem Federband durchsetzt ist, ist die Richtung und das Mass der Biegsamkeit einfach dadurch bestimmbar, ob nur in den einen von beiden oder in beide Schlitze ein Federband einsetzt, und ob man relativ steife oder weichere Federbänder verwendet.

Vorzugsweise ist einer der beiden Schlitze als zum Boden des Halterungselements paralleler Schlitz ausgebildet Wird nur in diesen bodenparallelen Schlitz ein Federband eingesetzt, dann kann der Kabelkanal (bei horizontal verlaufenden Boden jedes Halterungselements) praktisch nur in vertikaler Richtung gebogen werden. Höchstens geringfügige seitliche Verwindungen erscheinen möglich. Ein solcher Kabelkanal eignet sich also für aufsteigende und absteigende, oder horizontale Abschnitte bestens.

Ebenfalls bevorzugterweise ist einer der beiden Schlitze als zum Boden des Halterungselements paralleler Schlitz ausgebildet. Wird nur in diesen zum Boden des Halterungselements vertikalen Schlitz ein Federband eingesetzt, dann kann der Kabelkanal (bei horizontal verlaufenden Boden des Halterungselements) praktisch nur in horizontaler Richtung gebogen werden. Höchstens geringfügige vertikale Verwindungen erscheinen möglich. Ein solcher Kabelkanal eignet sich also für weitgehend horizontal verlaufende, beispielsweise zueinander versetzt aufgestellte Möbel verbindende Abschnitte bestens.

Natürlich kann man solche Abschnitte von Kabelkanälen aufeinander folgen lassen, wobei man dann beide Richtungsänderungen in sozusagen halbsteifer Ausführung zur Verfügung hätte. Man kann dazu lediglich entsprechend lange Federbandstücke in die betreffende Schlitze stecken.

Wenn man in wenigstens einem Abschnitt des Kabelkanals beide Schlitze von Federbändern durchsetzt vorsieht, erhält man ein relativ steifes, kaum biegbares Stück Kabelkanal. Das kann von Vorteil sein, wenn man beispielsweise eine Lücke zwischen zwei Tischen ohne besondere Stützen überbrücken will.

Vorzugsweise ist wenigstens einer der beiden Schlitze in einem zwischen den genannten Flanschen des Halterungselements von dessen Boden aufstrebenden Bodenvorsprung angeordnet. Dadurch kann erreicht werden, dass nichts nach unten über den genannten Boden vorsteht, das Halterungselement also eine vorzugsweise rechteckartige äussere Kontur aufweisen kann. Die in einem oder beiden Schlitzen angeordneten Federbänder befinden sich dann sozusagen im Inneren des Kabelkanals, was sich beim Verlegen günstig auswirken kann.

Wenn in bevorzugter Weise der soeben genannte Bodenvorsprung zu beiden Seiten keilartig zu den Schlitzen zulaufend ausgebildet ist, ergibt sich selbst dann eine gute Biegbarkeit, wenn die Halterungselemente an diesen keilartig zulaufenden Stellen unmittelbar aneinanderstossen. Man braucht die Halterungselemente also nicht besonders zu beabstanden. Das wiederum ist ein Vorteil bei der Montage vor Ort, die immer häufiger an Bedeutung gewinnt.

Vorzugsweise weist jeder der beiden Flansche des Halterungselements einen zum anderen Flansch hin gerichteten Fortsatz auf. So kann man zwischen den nahe beisammenliegenden Ende dieser Fortsätze Kabel in den Kabelkanal einlagen, während einem ungewollten Herausfallen der Kabel vorgebeugt werden kann.

Wenn bei der soeben genannten bevorzugten Ausführungsform des Kabelkanals (in weiter bevorzugter Weise) wenigstens die Fortsätze elastisch biegsam sind, ist das Einlegen und Herausnehmen der Kabel selbst dann sehr leicht, wenn die Fortsätze sich quasi berührend nahe sind.

Insbesondere im letztgenannten Falle ist bei der weiter oben geschilderten bevorzugten Ausführungsform vorteilhaft, wenn jeder der Flansche zusammen mit seinem Fortsatz mit dem Bodenvorsprung und mit dem zwischen dem Flansch und dem Bodenvorsprung befindlichen Bodenteil einen zwischen Flansch und Bodenfortsatz unterbrochenen Ring bildet. Man hat dann zwei Kammern, in denen man z.B. Schwachstromkabel von Starkstromkabeln getrennt einordnen kann.

Die vorstehenden Variationsmöglichkeiten sind bei weitem nicht eine erschöpfende Aufzählung, was auch für die dazu genannten Vorteile gilt. Jedenfalls schafft die Erfindung einen vielseitig verwendbaren, vorfertigbaren und/oder vor Ort fertigstellbaren und abänderbaren Kabelkanal grosser Anpassungsfähigkeit, ohne unnötige Stabilitätseinbusse.

Die Vorteile der in der eingangs genannten Literatur geschilderten Kabelkanäle sind also nicht geschmälert, so dass man beispielsweise an jeder Stelle des Kabelkanals zwischen zwei Halterungselementen mit Kabeln in den Kabelkanals hinein oder daraus heraus zweigen kann, ohne besondere Massnahmen ergreifen zu müssen.

Die Erfindung wird nachstehend anhand der rein schematischen Zeichnung beispielsweise besprochen.

Es zeigen:

Fig. 1 eine fragmentare Draufsicht auf einen gerade verlaufend dargestellten Kabelkanal 100 mit einem einzigen, im Querschnitt horizontalen Federband F,

Fig. 2 eine Seitenansicht nach Pfeil II in Fig. 1 mit an das gerade Stück angefügten, nach oben bzw. nach unten gebogenen Teilen des Kabelkanals 100,

Fig. 3 eine fragmentare Seitenansicht eines gerade verlaufend dargestellten Kabelkanals 200 mit einem einzigen, im Querschnitt vertikalen Federband F,

Fig. 4 eine Draufsicht nach Pfeil IV in Fig. 3 mit angefügten, nach rechts bzw. nach links gebogenen Teilen des Kabelkanals 200,

Fig. 5 eine fragmentare Draufsicht auf einen geraden Kabelkanal 300 mit je einem horizontalen und vertikalen Federband F,

Fig. 6 eine Seitenansicht nach Pfeil VI in Fig. 5, des geraden Kabelkanals 300,

Fig. 7 ein grössenmässig zu den Fig. 1 bis 6 passendes Schaubild eines Abschnitts eines Federbands F,

Fig. 8 eine gegenüber den Fig. 1 bis 7 vergrösserte Ansicht eines Halterungselements 1 nach Pfeil VIII in Fig 1, 4 und 5,

Fig. 9 eine Ansicht nach Pfeil IX in Fig. 8, und

Fig. 10 eine Ansicht nach Pfeil X in Fig. 7.

In der Zeichnung sind:

100 Ein Kabelkanal, dessen Träger ein horizontales Federband F ist.

200 Ein Kabelkanal, dessen Träger ein vertikales Federband F ist.

300 Ein Kabelkanal, dessen Träger je ein horizontales und vertikales Federband F ist.

1 Ein Halterungselement, insbesondere einstückig aus Kunststoff, in allen drei Kabelkanälen vorhanden.

11 Boden von 1.

111 Bodenteil, je einer beidseits von 14.

12 Flansch, je von beiden Enden von 12 aufragend angeformt.

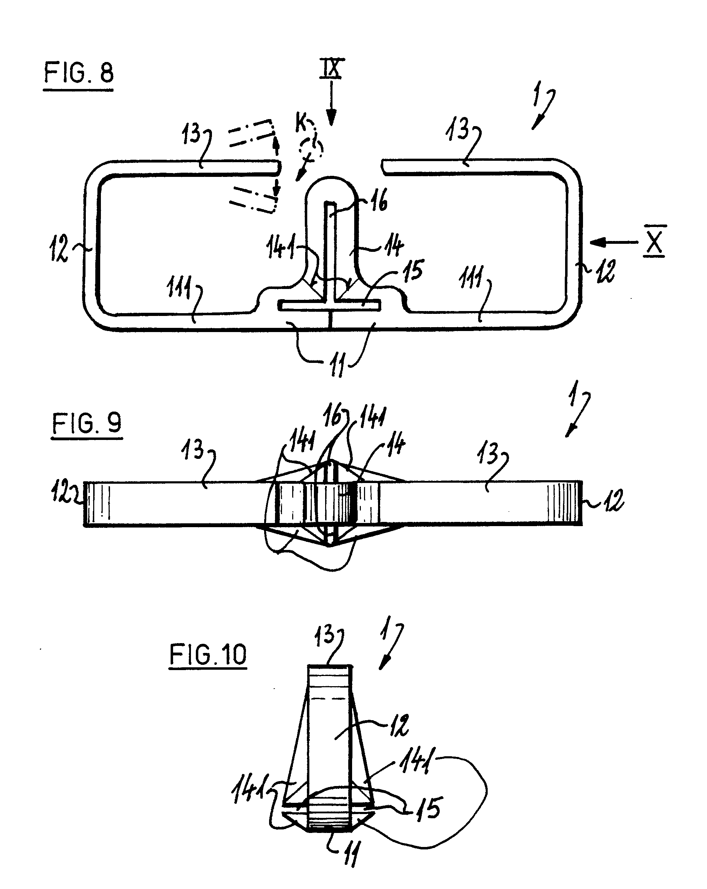

13 Fortsatz, je am Ende jedes Flansches 12 angeformt; wie links in Fig. 8 gezeigt auslenkbar um Kabel K einzulegen oder herauszunehmen.

14 Bodenvorsprung, innen an 11.

141 Keilpartie von 14, je an dessen beiden Seiten ausgebildet.

15 Horizontalschlitz in 14, parallel zu 11.

16 Vertikalschlitz in 14, vertikal zu 11 und 15, mit seinem unteren Ende von der Mitte von 15 ansteigend.

F Federband, insbesondere aus Stahl.

K Kabel, nur in Fig. 8 links strichpunktiert.

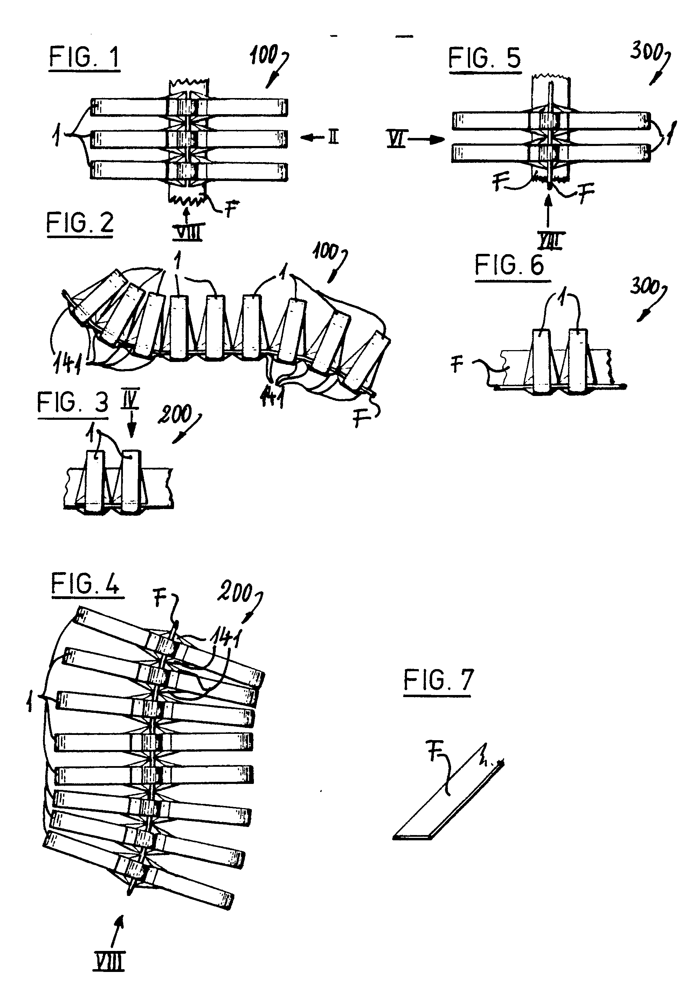

In den Fig. 1 und 2 ist ein Kabelkanal 100 abgebildet, bei welchem nur im Horizontalschlitz 15 des Bodenvorsprungs 14 (Fig. 8 und 10), der zum Boden 11 der Halterungselemente 1 (Fig. 8) parallel verläuft, ein Federelement F ist. Daher kann der Kabelkanal 100 nach unten und nach oben gebogen werden, wie dies beispielsweise Fig. 2 andeutet. Die Krümmungsradien sind solange beliebig, bis die Halterungselemente mit den Fortsätzen 13 der Flansche 12 (Fig. 8) aneinanderstossen. Dies ist ohne besondere Abstandstücke möglich, weil jedes Halterungselement um die Schlitze 15, 16 Keilpartien 141 angeformt hat (Fig. 9 und 10).

In den Fig. 3 und 4 ist ein Kabelkanal 200 abgebildet, bei welchem nur im Vertikalschlitz 16 des Bodenvorsprungs 14 (Fig. 8 und 9), der zum Boden 11 der Halterungselemente 1 (Fig. 8) vertikal verläuft, ein Federelement F ist. Daher kann der Kabelkanal 200 nach rechts und links gebogen werden, wie dies beispielsweise Fig 4 andeutet. Die Krümmungsradien sind solange beliebig, bis die Halterungselemente mit den Flanschen 12 (Fig. 8) aneinanderstossen. Dies ist ohne besondere Abstandstücke möglich, weil jedes Halterungselement um die Schlitze 15, 16 Keilpartien 141 angeformt hat (Fig. 9 und 10).

In den Fig. 5 und 6 ist ein Kabelkanal 300 abgebildet, bei welchem sowohl im Horizontalschlitz 15 als auch im Vertikalschlitz 16 des Bodenvorsprungs 14 (Fig. 8), je ein Federelement F eingesetzt ist. Daher kann der Kabelkanal 300 nicht gebogen werden, weil das im Vertikalschlitz 16 befindliche Federband F eine Auslenkung aus der Horizontalen verhindert, während das im Horizontalschlitz 15 sitzende Federband F eine Auslenkung seitlich verhindert. Es liegen die gleichen Verhältnisse, wie bei einem T-profil vor. Die bereits genannten Keilpartien 141 wirken hier versteifend auf die Federbänder F.

Man kann durch Einschieben eines anders gerichteten Federbands in das letzte Halterungselement eines Kabelkanals 100 oder 200 die Fortsetzung mit einem Kabelkanal 200 oder 100 erreichen, also jederzeit das Richtungsänderungsvermögen quasi unvermittelt verändern. Ist die Ueberlappungszone etwas länger, beispielsweise mehrere Halterungselemente lang, so liegt zwischen den verschieden verbiegbaren Abschnitten ein unverbiegbarer gerader Abschnitt.

Dort wo die einfache gleitende Aufreihung der Halterungselemente auf das oder die Federbänder nicht ausreichend sein sollte, kann man mechanisch (z.B. mit Stiften) oder durch Klebung (z.B. mit sogenanntem Sekundenkleber, wie Cyanolite) eine Sicherung vorsehen. Das wird man in der Regel nur an Uebergangsstellen und Enden vornehmen. Besonders an den Enden besteht auch die Möglichkeit der Abknickung oder anderweitigen Verformung eines Federbandes.

Man kann durch das links in Fig 8 ersichtliche elastische Verbiegen der Flansche 13 das Einlegen und herausnehmen von Kabeln K erleichtern; dabei kann der Platz auch für Stecker und dergleichen ausreichend gemacht werden.

Es ist somit gezeigt worden, dass man auf einfachste Weise einen, insbesondere zum Verkabeln von Mobiliar geeigneten Kabelkanal aus nur zwei verschiedenen Bestandteilen aufzubauen vermag, und neben der Wirtschaftlichkeit auch Vielseitigkeit möglich ist, welche bis anhin enormen Aufwand bedingte.

**Ansprüche**

1. Kabelkanal, mit einem biegsamen Träger und quer dazu angeordneten Halterungselementen, deren jedes einen mit dem Träger verbundenen Boden und zwei an dessen Enden davon aufragende Flansche aufweist,
dadurch gekennzeichnet, dass
jedes Halterungselement (1) in Verbindung mit seinem Boden (11) zwei zueinander rechtwinklige Schlitze (15, 16) aufweist, von denen wenigstens einer von einem Federband (F) durchsetzt ist.

2. Kabelkanal nach Anspruch 1, dadurch gekennzeichnet, dass einer der beiden Schlitze (15, 16) als zum Boden (11) des Halterungselements (1) paralleler Horizontalschlitz (15) ausgebildet ist.

3. Kabelkanal nach Anspruch 1 oder 2, dadurch gekennzeichnet, dass einer der beiden Schlitze (15, 16) als zum Boden (11) des Halterungselements (1) vertikaler Vertikalschlitz (16) ausgebildet ist.

4. Kabelkanal nach einem der Ansprüche 1 bis 3, dadurch gekennzeichnet, dass wenigstens abschnittweise beide Schlitze (15, 16) von je einem von zwei Federbändern (F) durchsetzt sind.

5. Kabelkanal nach einem der Ansprüche 1 bis 4, dadurch gekennzeichnet, dass wenigstens einer der beiden Schlitze (15, 16) in einem zwischen den Flanschen (12) vom Boden (11) des Halterungselements (1) aufstrebenden Bodenvorsprung (14) angeordnet ist.

6. Kabelkanal nach Anspruch 5, dadurch gekennzeichnet, dass der Bodenvorsprung (14) zu beiden Seiten je eine Keilpartie (141) aufweist, deren jede keilartig zu den Schlitzen (15, 16) zulaufend ausgebildet ist.

7. Kabelkanal nach einem der Ansprüche 1 bis 6, dadurch gekennzeichnet, dass jeder der beiden Flansche (12) einen zum anderen Flansch (12) hin gerichteten Fortsatz (13) aufweist

8. Kabelkanal nach Anspruch 7, dadurch gekennzeichnet, dass wenigstens die Fortsätze (13) elastisch biegsam sind.

9. Kabelkanal nach den Ansprüchen 6 und 7, oder 8, dadurch gekennzeichnet, dass jeder der Flansche (12) zusammen mit seinem Fortsatz (13), mit dem Bodenvorsprung (14) und mit dem zwischen dem Flansch (12) und dem Bodenvorsprung (14) befindlichen Bodenteil (111) einen zwischen Flansch (12) und Bodenfortsatz (14) unterbrochenen Ring bildet.

FIG. 1          100

1          II

F
VIII

FIG. 2          100

1          1

141

141          F

FIG. 3     IV     200

1

FIG. 4     F     200

141

1

VIII

FIG. 5          300

VI          1

F          F

VII

FIG. 6          300

1

F

FIG. 7

F

FIG. 8

FIG. 9

FIG.10